# FASCICULE DE BREVET EUROPEEN

(11) **EP 2 106 316 B1**
(45) Date de publication et mention de la délivrance du brevet: **09.06.2010**
(21) Numéro de dépôt: 07871840.0
(22) Date de dépôt: 12.12.2007
(51) Int. Cl.: B23D 45/04, B23D 45/16, B23D 47/00, E01B 3/04

(54) **TRONCONNEUSE DE RAIL OU ANALOGUE**
MASCHINE ZUM SCHNEIDEN VON SCHIENEN ODER ÄHNLICHEM
RAIL CUT-OFF MACHINE OR THE LIKE

(30) Priorité: 27.12.2006 FR 0611453
(43) Date de publication de la demande: 07.10.2009
(73) Titulaire: SOCIETE DES ANCIENS ETABLISSEMENTS L. GEISMAR, F-92200 Neuilly sur Seine (FR)
(72) Inventeur: HUBOUD-PERON, Maurice, 38110 La Tour du Pin (FR)
(74) Mandataire: Maureau, Philippe
(86) Numéro de dépôt international: PCT/FR2007/002046
(87) Numéro de publication internationale: WO 2008/087285

(56) Documents cités:
- FR-A1- 2 639 373
- US-A- 5 545 079

## Description

La présente invention concerne une tronçonneuse de rail ou analogue. Le document US 5545079 décrit une tronçonneuse suivant le préambule de la revendication 1.

Le document FR 2 267 418 décrit une tronçonneuse de rail ou analogue comprenant un bloc moteur entraînant par courroie un disque de coupe fixé sur un porte disque, un fourreau d'axe parallèle à l'axe du disque de coupe, destiné à être fixé sur un dispositif de support et de guidage de la tronçonneuse comprenant un étau de fixation au rail et permettant un pivotement de la tronçonneuse dans le plan du disque de coupe.

Un premier inconvénient de ce type de tronçonneuse réside dans le fait qu'elle ne permet pas de réaliser des coupes perpendiculaires au rail avec une qualité de coupe satisfaisante.

En effet, les vibrations engendrées par le moteur et les contraintes exercées par l'utilisateur sur la tronçonneuse sont transmises directement au disque de coupe, ce qui ne permet pas de maintenir le disque de coupe dans un plan perpendiculaire au rail, et donc d'obtenir une qualité de coupe satisfaisante.

Un second inconvénient de ce type de tronçonneuse consiste en ce que les vibrations engendrées par le moteur et transmises au disque de coupe entraînent une usure rapide de celui-ci. Ainsi, la durée de vie d'un disque de coupe est très limitée, ce qui nécessite un remplacement régulier des disques de coupe. Cette usure rapide du disque de coupe augmente fortement les coûts et la durée de l'opération de coupe.

Un troisième inconvénient de ce type de tronçonneuse réside dans le fait que d'importantes vibrations générées par le moteur et le disque de coupe sont transmises à l'utilisateur durant l'opération de coupe, ce qui est très préjudiciable pour le confort et la sécurité de l'utilisateur.

La présente invention vise à remédier à ces inconvénients.

Le problème technique à la base de l'invention consiste donc à fournir une tronçonneuse permettant d'améliorer la qualité de coupe des rails, et de diminuer la vitesse d'usure du disque de coupe, tout en améliorant le confort et la sécurité de l'utilisateur.

A cet effet, la présente invention concerne une tronçonneuse de rail ou analogue suivant la revendication 1.

La réalisation d'un ensemble monobloc comprenant le fourreau destiné à être fixé sur un dispositif de support et de guidage de la tronçonneuse et le porte disque permet de maintenir fermement le disque de coupe dans un plan déterminé lorsque le fourreau est fixé sur un dispositif de support et de guidage de la tronçonneuse. Ceci permet de limiter les vibrations engendrées par le disque de coupe et donc d'obtenir une qualité de coupe améliorée et de diminuer la vitesse d'usure du disque de coupe.

De plus, les moyens élastiques sont adaptés pour se déformer élastiquement lorsque des contraintes sont exercées sur la tronçonneuse par l'utilisateur ou lorsque des vibrations sont générées par le moteur de manière à ne pas transmettre ces contraintes et vibrations au disque de coupe.

Ainsi, la présence de ces moyens élastiques permet d'améliorer encore la qualité de coupe de la tronçonneuse.

En outre, la présence de ces moyens élastiques permet d'éviter de transmettre à l'opérateur les vibrations engendrées par le disque de coupe et donc d'améliorer le confort et la sécurité de l'utilisateur.

Avantageusement, l'ensemble monobloc comprend une platine portant le fourreau et un palier destiné au montage d'un arbre d'entraînement du disque de coupe.

De préférence, l'arbre d'entraînement du disque de coupe fait saillie de part et d'autre du palier, une poulie d'entraînement coopérant avec la courroie du bloc moteur étant fixée sur une première extrémité de l'arbre d'entraînement et un dispositif de fixation du disque étant fixé sur l'autre extrémité de l'arbre d'entraînement.

Avantageusement, les moyens élastiques présentent une plus faible élasticité dans la direction de tension de la courroie que dans les autres directions. Cette caractéristique permet d'éviter une diminution trop importante de l'entraxe entre les axes de la poulie du moteur et de la poulie d'entraînement du disque de coupe. De ce fait, la courroie du moteur peut être maintenue sous une tension suffisante pour permettre l'entraînement de la poulie d'entraînement du disque.

De préférence, les moyens élastiques comportent au moins un élément élastique, tel qu'un plot ou une plaque, disposé entre le bloc moteur et la platine de l'ensemble monobloc. Il doit être noté que les éléments élastiques peuvent être des plots pouvant se présenter sous différentes formes et/ou de section différente sur leur longueur, les plots pouvant par exemple être cylindriques, tronconiques, parallélipipédique ou en forme de diabolo. Les plots ou les plaques peuvent être en caoutchouc naturel ou synthétique ou en toute autre matière synthétique.

Selon encore une autre caractéristique de l'invention, le bloc moteur comporte une première partie contenant le moteur de la tronçonneuse et une seconde partie sur laquelle est monté l'ensemble monobloc, la seconde partie étant déplaçable par rapport à la première partie de manière à permettre une mise sous tension suffisante de la courroie d'entraînement du disque de coupe, des moyens de verrouillage de la position relative des première et seconde parties étant prévus.

Avantageusement, la tronçonneuse comporte au moins un élément élastique s'étendant perpendiculairement au plan du disque de coupe, l'élément élastique étant disposé entre la seconde partie du bloc moteur et la platine de l'ensemble monobloc.

De préférence, la tronçonneuse comporte au moins un élément élastique s'étendant parallèlement au plan du disque de coupe, l'élément élastique étant disposé entre la seconde partie du bloc moteur et la platine de l'ensemble monobloc.

Selon une autre caractéristique de l'invention, chaque élément élastique s'étendant perpendiculairement au plan du disque de coupe présente une élasticité supérieure à chaque élément élastique s'étendant parallèlement au plan du disque de coupe.

Selon encore une autre caractéristique de l'invention, un capot de protection du disque est fixé sur la platine.

De toute façon l'invention sera bien comprise à l'aide de la description qui suit, en référence au dessin schématique indexé représentant, à titre d'exemple non limitatif, une forme d'exécution de cette tronçonneuse.
Figure 1 en est une vue de côté.
Figure 2 en est une vue partielle de dessus.
Figure 3 est une vue de côté de l'ensemble monobloc.
Figure 4 est une vue partielle de côté de la tronçonneuse dans laquelle l'ensemble monobloc est retiré.

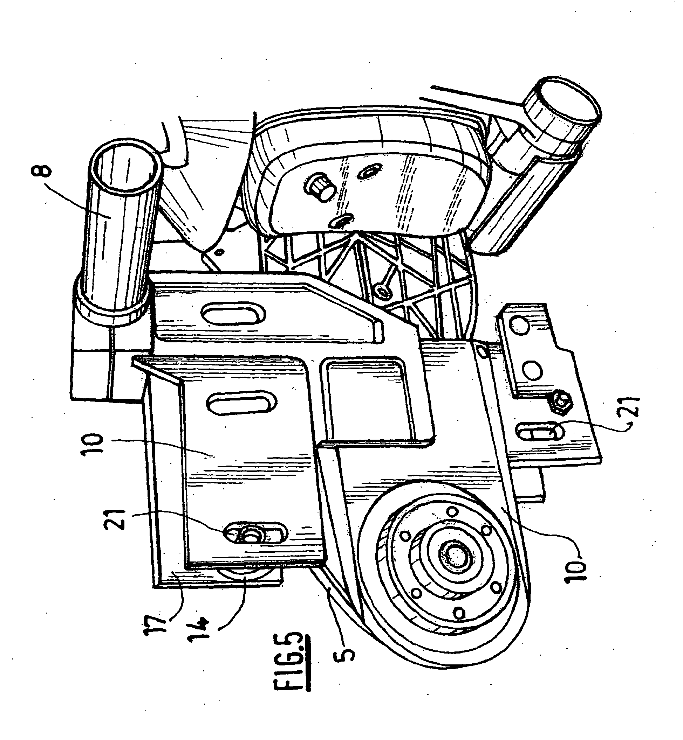

Figure 5 est une vue partielle de côté de la tronçonneuse dans laquelle le disque de coupe et le capot de protection sont démontés.
Figure 6 est une vue de côté d'un dispositif de support et de guidage de la tronçonneuse.

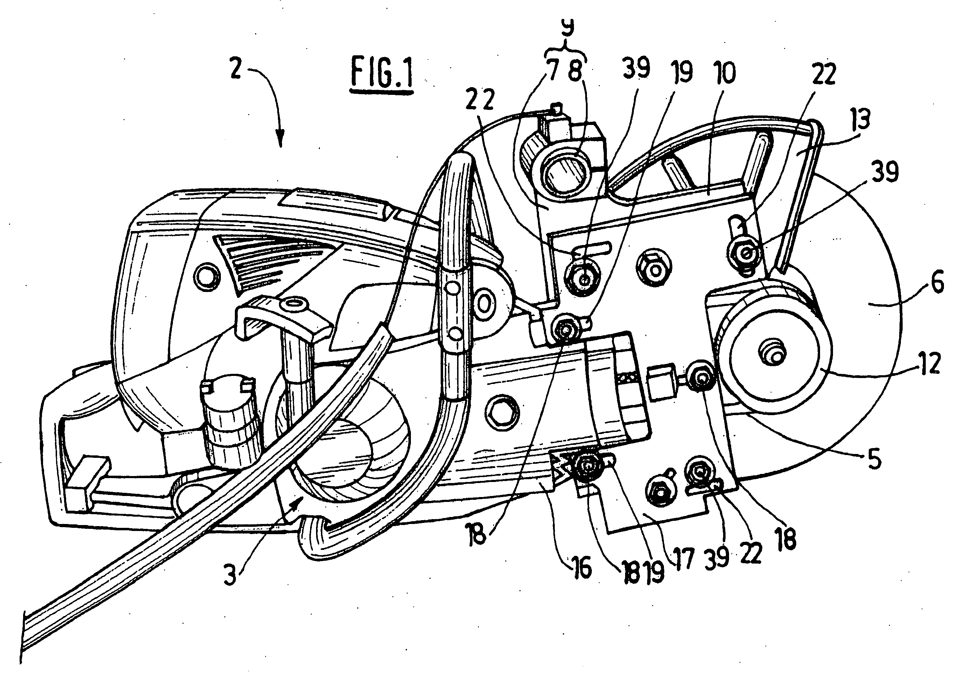

La figure 1 représente une tronçonneuse 2 de rail ou analogue comprenant un bloc moteur 3 entraînant par courroie 5 un disque de coupe 6 fixé sur un porte disque 7. Le disque de coupe est de préférence constitué par un disque abrasif.

La tronçonneuse 2 comprend en outre un fourreau 8 d'axe parallèle à l'axe du disque de coupe 6, destiné à être fixé sur un dispositif de support et de guidage de la tronçonneuse 26 comprenant un étau de fixation au rail et permettant un pivotement de la tronçonneuse dans le plan du disque de coupe et perpendiculairement au rail à découper.

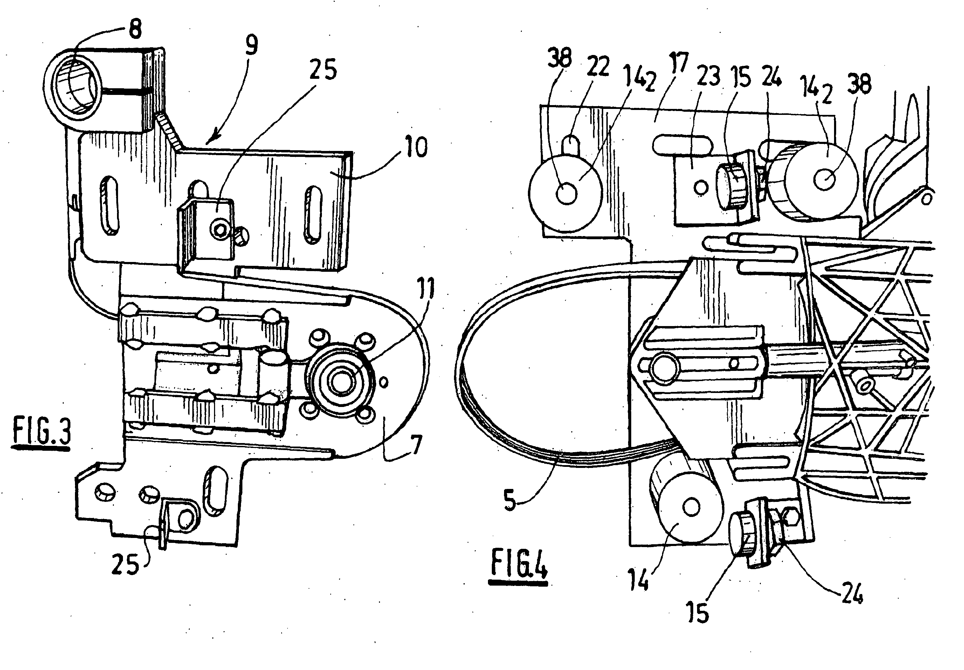

Le fourreau 8 et le porte disque 7 forment un ensemble monobloc 9. Comme montré plus particulièrement sur la figure 3, l'ensemble monobloc 9 comprend une platine 10 portant le fourreau 8 et un palier 11 destiné au montage d'un arbre d'entraînement du disque de coupe. L'arbre d'entraînement du disque de coupe fait saillie de part et d'autre du palier 11, une poulie d'entraînement 12 coopérant avec la courroie 5 du bloc moteur 3 étant fixée sur une première extrémité de l'arbre d'entraînement et un dispositif de fixation (non représenté sur les figures) du disque étant fixé sur l'autre extrémité de l'arbre d'entraînement.

Comme montré sur la figure 1, la tronçonneuse comprend également un capot de protection 13 du disque qui est fixé sur la platine 10.

L'ensemble monobloc 9 est monté sur le bloc moteur 3 avec interposition de moyens élastiques.

Les moyens élastiques comportent plusieurs plots élastiques 14, 15 sensiblement cylindriques disposés entre le bloc moteur 3 et la platine 10 de l'ensemble monobloc 9.

Le bloc moteur 3 comporte une première partie 16 contenant le moteur de la tronçonneuse et une seconde partie en forme de plaque 17 sur laquelle est monté latéralement l'ensemble monobloc 9. La seconde partie 17 est déplaçable par rapport à la première partie 16 de manière à permettre une mise sous tension suffisante de la courroie d'entraînement 5 du disque de coupe. Des moyens de verrouillage de la position relative des première et seconde parties sont prévus. Ces moyens de verrouillage comprennent des systèmes de fixation vis/écrou 18 destinés à coulisser dans des trous oblongs 19 ménagés dans la seconde partie 17 du bloc moteur, les trous s'étendant dans la direction de tension de la courroie 5.

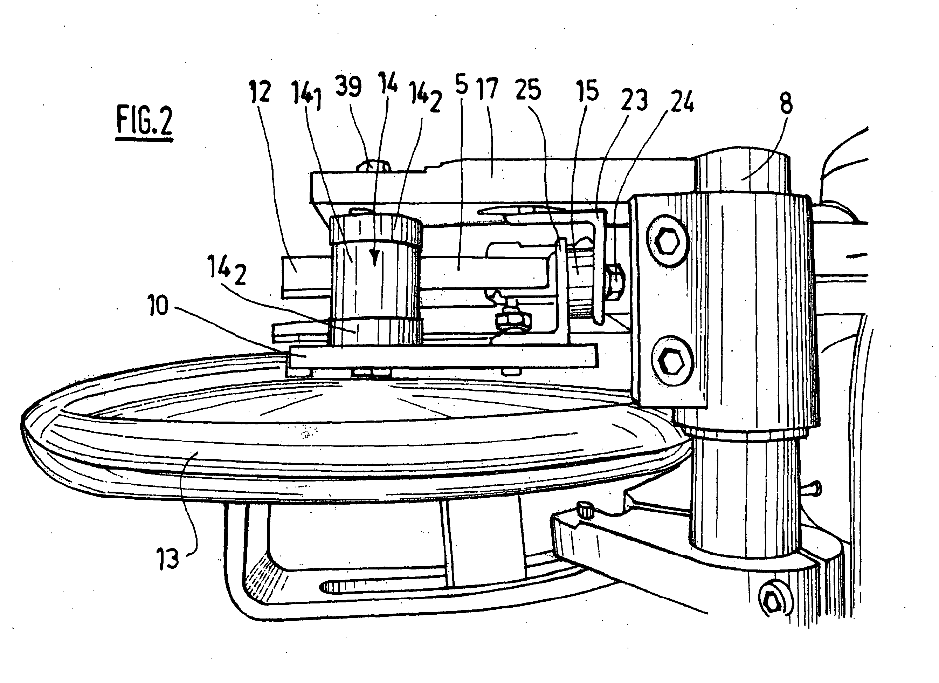

Comme montré sur les figures 2 et 4, la tronçonneuse 2 comporte trois plots élastiques 14 s'étendant perpendiculairement au plan du disque de coupe et deux plots élastiques 15 s'étendant parallèlement au plan du disque de coupe et sensiblement dans la direction de tension de la courroie, les plots 14 et 15 étant disposés entre la seconde partie 17 du bloc moteur et la platine 10 de l'ensemble monobloc 9.

Il doit être noté que les plots élastiques 14 présentent une élasticité supérieure à celle des plots élastiques 15 de manière à éviter une diminution trop importante de l'entraxe des axes de la poulie du moteur et de la poulie d'entraînement 12 durant la coupe qui pourrait avoir comme conséquence une mise sous tension insuffisante de la courroie d'entraînement 5 du disque.

Chaque plot élastique 14 est constitué d'une partie centrale cylindrique 14₁ réalisée en caoutchouc naturel et de deux parties d'extrémité 14₂ cylindriques et métalliques. Chaque partie d'extrémité comporte un orifice axial taraudé 18 débouchant dans une face d'extrémité du plot.

La fixation de chaque plot 14 entre la platine 10 et la seconde partie 17 du bloc moteur 3 est réalisée par l'intermédiaire de deux vis de fixation 19 dont la tige filetée traverse respectivement une ouverture 21, 22 ménagée dans la platine ou dans la seconde partie 17 du bloc moteur et coopère avec l'orifice axial taraudé de la partie d'extrémité correspondante du plot, et dont la tête forme butée et coopère avec respectivement la paroi extérieure de la platine 10 ou de la seconde partie 17.

Chaque plot élastique 15 est constitué d'une partie cylindrique réalisée en caoutchouc naturel et d'une tige axiale fileté fixée sur l'une des faces d'extrémité de la partie cylindrique du plot.

La fixation de chaque plot 15 entre la platine 10 et la seconde partie 17 du bloc moteur 3 est réalisée en insérant la tige filetée du plot 15 dans une ouverture ménagée dans l'aile d'une équerre 23 fixée sur la paroi intérieure de la seconde partie 17 du bloc moteur, un écrou 24 étant vissé sur la tige fileté du plot de manière à fixer le plot 15 sur l'équerre 23. Une autre équerre 25 est fixé sur la paroi intérieure de la platine 10 de manière à prendre appui contre la face d'extrémité du plot opposée à l'écrou.

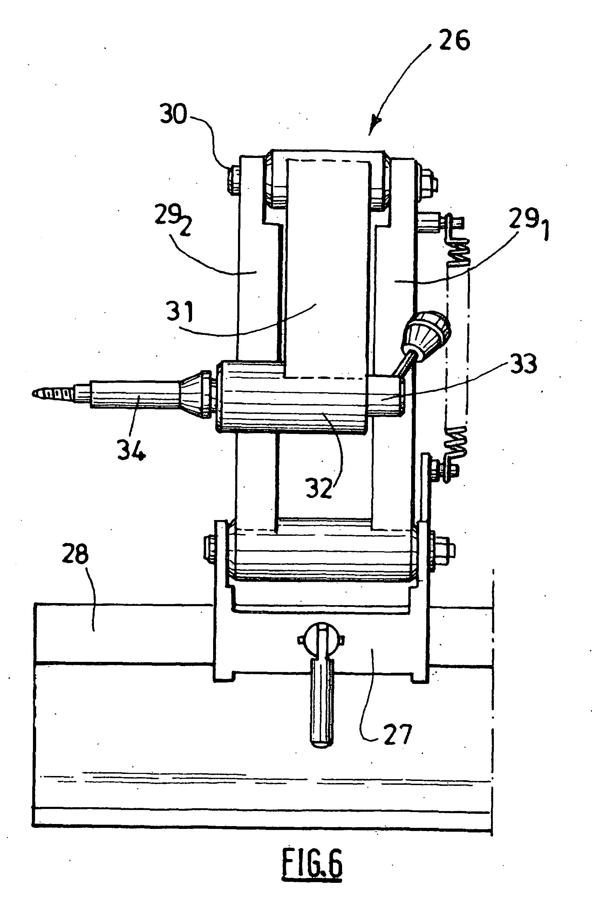

En outre, la tronçonneuse comprend, comme montré sur la figure 6, un dispositif de support et de guidage de la tronçonneuse 26 comprenant un étau de fixation 27 au rail 28 solidaire d'un bras principal 29₁, 29₂ à l'extrémité duquel est articulé, autour d'un arbre d'articulation 30 perpendiculaire au plan du disque de coupe et parallèle au plan du rail, un bras de support 31 sur lequel est articulé finalement la tronçonneuse. Le bras de support 31 comprend un palier 32 d'axe parallèle à l'axe du disque de coupe dans lequel peut tourillonner un arbre 33 immobilisé axialement et faisant saillie du palier, la portion 34 de l'axe faisant saillie du palier étant destinée à être vissée dans le fourreau 8 appartenant à la tronçonneuse.

Comme il va de soi, l'invention ne se limite pas à la seule forme d'exécution de cette tronçonneuse de rail, décrite ci-dessus à titre d'exemple, elle en embrasse au contraire toutes les variantes de réalisation. C'est ainsi notamment que les moyens élastiques pourraient être constitués par des ressorts, des vérins hydrauliques ou à gaz, ou être réalisés en matière viscoélastique.

## Revendications

1. Tronçonneuse (2) de rail ou analogue comprenant un bloc moteur (3) entraînant par courroie (5) un disque de coupe (6) fixé sur un porte disque (7), un fourreau (8) d'axe parallèle à l'axe du disque de coupe, destiné à être fixé sur un dispositif de support et de guidage (26) de la tronçonneuse comprenant un étau de fixation (27) au rail (28) et permettant un pivotement de la tronçonneuse dans le plan du disque de coupe; le fourreau et le porte disque forment un ensemble monobloc (9) monté sur le bloc moteur (3) **caractérisée en ce que** l'ensemble monobloc (9) est monté sur le bloc moteur (3) avec interposition de moyens élastiques (14, 15).

2. Tronçonneuse de rail ou analogue selon la revendication 1, **caractérisée en ce que** l'ensemble monobloc comprend une platine (10) portant le fourreau (8) et un palier (11) destiné au montage d'un arbre d'entraînement du disque de coupe.

3. Tronçonneuse de rail ou analogue selon l'une des revendications 1 et 2, **caractérisée en ce que** les moyens élastiques présentent une plus faible élasticité dans la direction de tension de la courroie (5) que dans les autres directions.

4. Tronçonneuse de rail ou analogue selon l'une des revendications 2 et 3, **caractérisée en ce que** l'arbre d'entraînement du disque de coupe fait saillie de part et d'autre du palier, une poulie d'entraînement (12) coopérant avec la courroie du bloc moteur étant fixée sur une première extrémité de l'arbre d'entraînement et un dispositif de fixation du disque étant fixé sur l'autre extrémité de l'arbre d'entraînement.

5. Tronçonneuse de rail ou analogue selon l'une des revendications 1 à 4, **caractérisée en ce que** les moyens élastiques comportent au moins un élément élastique (14, 15), tel qu'un plot ou une plaque, disposé entre le bloc moteur et la platine de l'ensemble monobloc.

6. Tronçonneuse de rail ou analogue selon l'une des revendications 1 à 5, **caractérisée en ce que** le bloc moteur (3) comporte une première partie (16) contenant le moteur de la tronçonneuse et une seconde partie (17) sur laquelle est monté l'ensemble monobloc (9), la seconde partie étant déplaçable par rapport à la première partie de manière à permettre une mise sous tension suffisante de la courroie d'entraînement du disque de coupe, des moyens de verrouillage (18) de la position relative des première et seconde parties étant prévus.

7. Tronçonneuse de rail ou analogue selon l'une des revendications 5 et 6, **caractérisée en ce qu'**elle comporte au moins un élément élastique (14) s'étendant perpendiculairement au plan du disque de coupe (6), l'élément élastique étant disposé entre la seconde partie (17) du bloc moteur et la platine (10) de l'ensemble monobloc.

8. Tronçonneuse de rail ou analogue selon l'une des revendications 5 à 7, **caractérisée en ce qu'**elle comporte au moins un élément élastique (15) s'étendant parallèlement au plan du disque de coupe, l'élément élastique étant disposé entre la seconde partie (17) du bloc moteur et la platine (10) de l'ensemble monobloc.

9. Tronçonneuse de rail ou analogue selon la revendication 8, **caractérisée en ce que** chaque élément élastique (14) s'étendant perpendiculairement au plan du disque de coupe présente une élasticité supérieure à chaque élément élastique (15) s'étendant parallèlement au plan du disque de coupe.

10. Tronçonneuse de rail ou analogue selon l'une des revendications 1 à 9, **caractérisée en ce qu'**un capot de protection (13) du disque est fixé sur la platine (10).

## Claims

1. Cut-off machine (2) for rails or the like, comprising a drive unit (3) driving, via a belt (5), a cutting disk (6) fixed to a disk holder (7), a sleeve (8) of axis parallel to the axis of the cutting disk, intended to be fixed to a support and guidance device (26) for supporting and guiding the cut-off machine and comprising a vise (27) for attachment to the rail (28) and allowing the cut-off machine to pivot in the plane of the cutting disk; the sleeve and the disk holder form a one-piece assembly (9) mounted on the drive unit (3) **characterized in that** the one-piece assembly (9) is mounted on the drive unit (3) with the interposition of elastic means (14, 15).

2. Cut-off machine for rails or the like according to Claim 1, **characterized in that** the one-piece assembly comprises a mounting plate (10) bearing the sleeve (8) and a bearing (11) for mounting a cutting disk driveshaft.

3. Cut-off machine for rails or the like according to one of Claims 1 and 2, **characterized in that** the elastic means have lower elasticity in the direction in which the belt (5) is tensioned than they do in the other directions.

4. Cut-off machine for rails or the like according to one of Claims 2 and 3, **characterized in that** the cutting disk driveshaft projects on each side of the bearing, a drive pulley (12) collaborating with the belt of the drive unit being fixed to a first end of the driveshaft and a disk attachment device being fixed to the other end of the driveshaft.

5. Cut-off machine for rails or the like according to one of Claims 1 to 4, **characterized in that** the elastic means comprise at least one elastic element (14, 15), such as a block or a sheet, positioned between the drive unit and the mounting plate of the one-piece assembly.

6. Cut-off machine for rails or the like according to one of Claims 1 to 5, **characterized in that** the drive unit (3) comprises a first part (16) containing the motor of the cut-off machine and a second part (17) on which the one-piece assembly (9) is mounted, the second part being movable with respect to the first part so as to allow the cutting disk drive belt to be tensioned sufficiently, locking means (18) being provided for locking the relative position of the first and second parts.

7. Cut-off machine for rails or the like according to one of Claims 5 and 6, **characterized in that** it comprises at least one elastic element (14) running at right angles to the plane of the cutting disk (6), the elastic element being positioned between the second part (17) of the drive unit and the mounting plate (10) of the one-piece assembly.

8. Cut-off machine for rails or the like according to one of Claims 5 to 7, **characterized in that** it comprises at least one elastic element (15) running parallel to the plane of the cutting disks, the elastic element being positioned between the second part (17) of the drive unit and the mounting plate (10) of the one-piece assembly.

9. Cut-off machine for rails or the like according to Claim 8, **characterized in that** each elastic element (14) running at right angles to the plane of the cutting disk has greater elasticity than each elastic element (15) running parallel to the plane of the cutting disk.

10. Cut-off machine for rails or the like according to one of Claims 1 to 9, **characterized in that** a protective disk guard (13) is fixed to the mounting plate (10).

## Patentansprüche

1. Schneidemaschine (2) für Schienen oder Ähnliches, mit einem Motorblock (3), der über einen Riemen (5) eine an einem Scheibenhalter (7) befestigte Schneidscheibe (6) antreibt, mit einer Hohlwelle (8) einer Achse parallel zur Achse der Schneidscheibe, die dazu bestimmt ist, an einer Trag- und Führungsvorrichtung (26) der Schneidemaschine befestigt zu werden, die einen Schraubstock (27) zur Befestigung an der Schiene (28) aufweist und ein Schwenken der Schneidemaschine in der Ebene der Schneidscheibe erlaubt, wobei die Hohlwelle und der Scheibenhalter eine einstückige Einheit (9) bilden, die auf den Motorblock (3) montiert ist, **dadurch gekennzeichnet, dass** die einstückige Einheit (9) mit Zwischenfügung von elastischen Einrichtungen (14, 15) auf den Motorblock (3) montiert wird.

2. Schneidemaschine für Schienen oder Ähnliches nach Anspruch 1, **dadurch gekennzeichnet, dass** die einstückige Einheit eine die Hohlwelle (8) tragende Platine (10) und ein Lager (11) enthält, das für die Montage einer Antriebswelle der Schneidscheibe bestimmt ist.

3. Schneidemaschine für Schienen oder Ähnliches nach einem der Ansprüche 1 und 2, **dadurch gekennzeichnet, dass** die elastischen Einrichtungen eine geringere Elastizität in der Spannungsrichtung des Riemens (5) als in den anderen Richtungen aufweisen.

4. Schneidemaschine für Schienen oder Ähnliches nach einem der Ansprüche 2 und 3, **dadurch gekennzeichnet, dass** die Antriebswelle der Schneidscheibe zu beiden Seiten des Lagers vorsteht, wobei eine mit dem Riemen des Motorblocks zusammenwirkende Riemenscheibe (12) an einem ersten Ende der Antriebswelle befestigt ist und eine Befestigungsvorrichtung der Scheibe am anderen Ende der Antriebswelle befestigt ist.

5. Schneidemaschine für Schienen oder Ähnliches nach einem der Ansprüche 1 bis 4, **dadurch gekennzeichnet, dass** die elastischen Einrichtungen mindestens ein elastisches Element (14, 15) wie ein Klötzchen oder eine Platte aufweisen, das zwischen dem Motorblock und der Platine der einstückigen Einheit angeordnet ist.

6. Schneidemaschine für Schienen oder Ähnliches nach einem der Ansprüche 1 bis 5, **dadurch gekennzeichnet, dass** der Motorblock (3) einen ersten Teil (16), der den Motor der Schneidemaschine enthält, und einen zweiten Teil (17) aufweist, auf den die einstückige Einheit montiert (9) ist, wobei der zweite Teil bezüglich des ersten Teils so verschiebbar ist, dass ein ausreichendes Spannen des Antriebsriemens der Schneidscheibe ermöglicht wird, wobei Einrichtungen (18) zur Verriegelung der Stellung des ersten und des zweiten Teils zueinander vorgesehen sind.

7. Schneidemaschine für Schienen oder Ähnliches nach einem der Ansprüche 5 und 6, **dadurch gekennzeichnet, dass** sie mindestens ein elastisches Element (14) aufweist, das sich lotrecht zur Ebene der Schneidscheibe (6) erstreckt, wobei das elastische Element zwischen dem zweiten Teil (17) des Motorblocks und der Platine (10) der einstückigen Einheit angeordnet ist.

8. Schneidemaschine für Schienen oder Ähnliches nach einem der Ansprüche 5 bis 7, **dadurch gekennzeichnet, dass** sie mindestens ein elastisches Element (15) aufweist, das sich parallel zur Ebene der Schneidscheibe erstreckt, wobei das elastische Element zwischen dem zweiten Teil (17) des Motorblocks und der Platine (10) der einstückigen Einheit angeordnet ist.

9. Schneidemaschine für Schienen oder Ähnliches nach Anspruch 8, **dadurch gekennzeichnet, dass** jedes sich lotrecht zur Ebene der Schneidemaschine erstreckende elastische Element (14) eine höhere Elastizität hat als jedes elastische Element (15), das sich parallel zur Ebene der Schneidscheibe erstreckt.

10. Schneidemaschine für Schienen oder Ähnliches nach einem der Ansprüche 1 bis 9, **dadurch gekennzeichnet, dass** eine Schutzhaube (13) der Scheibe an der Platine (10) befestigt ist.
